# EUROPEAN PATENT SPECIFICATION

(11) **EP 2 369 021 B1**
(45) Date of publication and mention of the grant of the patent: **04.03.2015**
(21) Application number: 11152355.1
(22) Date of filing: 27.01.2011
(51) Int. Cl.: C22B 7/00, C22B 43/00

(54) **Processing and apparatus for spent flat screens containing mercury**
Verfahren und Vorrichtung zur Verarbeitung Quecksilber enthaltender verbrauchter Flachbildschirme
Procédé et dispositif pour transformation d'écrans plats usés contenant du mercure

(30) Priority: 29.01.2010 NL 1037665
(43) Date of publication of application: 28.09.2011
(73) Proprietor: Van Gansewinkel Groep B.V., 5657 DH Eindhoven (NL)
(72) Inventor: Willocx, Wim Jozef Rosa, 1730 Asse-Kobbegem, (BE); Van 't Geloof, Wilhelmus Adrianus Maria, 5691 KV Son en Breugel (NL)
(74) Representative: Algemeen Octrooi- en Merkenbureau B.V.

(56) References cited:
- EP-A1- 2 002 902
- WO-A1-00/56474
- WO-A1-98/22628
- WO-A1-2005/051559
- FR-A1- 2 900 075
- JP-A- 2001 011 548
- RU-C2- 2 281 311
- US-A- 5 569 154
- US-A- 5 989 486

## Description

The present invention relates to a device suitable for processing products that comprise mercury, such as flat screens, and to a method for processing flat screens.

As a rule, the processing (or recycling) of electrical appliances involves converting the same into various raw materials for the production of new appliances. At present a European guideline on discarded electrical and electronic appliances prescribes a minimum recycling percentage of 75%. A processing process designed to accomplish this objective is known in the art.

Such a processing process is roughly as follows:
First, hazardous materials such as batteries, asbestos and ink cartridges are removed from a material flow. Then the material is pre-crushed, so that internal parts come free practically undamaged; internal batteries that have come free are manually removed from the flow. Subsequently, iron is removed from the material, which material is then subjected to further crushing. Using various separation techniques, all kinds of metals are separated, such as aluminium, copper, brass, stainless steel and wire. Said metals can be converted into raw materials in melting furnaces. A final purification step may yield a clean plastic mix that can be used in the production of new plastics.

A device for processing fluorescent lamps is known. In said device, old lamps are placed one by one on a conveyor belt. A blade then cuts off the metal ends of the lamp, so that the wind can freely blow therethrough. This actually happens during the next stage: an air blast blows the phosphorus from the glass envelope. Said phosphor powder, which also contains mercury, is blown to a collecting bin. Using this process, it is also possible to separate phosphor powders from the various types of fluorescent lamps. The phosphorus-mercury mixture separated by the air washing operation lands in the bin associated with the detected phosphorus type in question. A drawback, however, is the fact that powders from other manufacturers are carried off to a processing plant as chemical waste. The powders to be processed are subjected to further processing in a plant, such that the mercury is removed from the powder mixture, after which the phosphor powder is upgraded. Subsequently, pure phosphor powder remains, which is suitable for use in new fluorescent lamps. The mercury that is reclaimed goes to a specialised company, which renders the metal suitable for reuse.

An important drawback of such a method is the fact that flat screens comprise elements, such as tubes, which comprise mercury. Said tubes are easily damaged during the processing thereof, so that mercury is released, and consequently also mercury vapour.

Furthermore, such a method is not suitable for complex products, such as flat screens.

Another drawback is also the fact that mercury vapour may be released when an entirely or partially manual processing process is used. This is undesirable both for people and for the environment.

Another drawback is that comparatively more personnel is needed in the case of manual processing, which is relatively costly and inefficient. French patent FR2900075 discloses a method for processing mercury-containing flat screens, comprising the steps of reducing the product to particles of a diameter under 10 mm and immobilising the resulting mercury vapour. This process includes several separation steps and subsequent washing of the product to remove all mercury.

Accordingly it is an object of the present invention, according to a first aspect thereof, to provide a method for processing products that contain mercury, such as flat screens. This object is accomplished by a method for processing a residual product that contains mercury, which method comprises the steps of
a. reducing the residual product, thereby obtaining particles having a suitable size,
b. heating said particles to a temperature preferably within the range of 30 °C to 120 °C, for a period of preferably 5 - 120 minutes, thereby producing mercury vapour, and
c. immobilising mercury vapour.

The term "flat screen" is understood to mean an LCD screen or a device comprising such a screen. The preferred embodiment is in particular suitable for the processing of flat screens, its design being optimized therefor.

An important advantage of the present method is that it can be carried out in a largely or entirely mechanized process under controlled conditions. As such, safe conditions both for people and for the environment can be readily ensured.

Furthermore, a significant part of the residual product, typically more than 90%, is converted into reusable raw materials.

The danger of mercury vapour, which may be released upon execution of the method, is overcome in that the method ensures that mercury is released during the process and is subsequently immobilized.

In a preferred embodiment of the present method, said reduction takes place in a shredder (3), preferably into particles having a diameter of less than 20 cm, preferably less than 12 cm, even more preferably less than 8 cm, for example less than 3.8 cm. One the one hand it is preferable if the particles or not too large, because in that case mercury will be released to an insufficient degree or may even be retained altogether. On the other hand, the particles need not be further reduced when using the present method, because mercury can be released to a substantial extent. Further reduction may involve the drawback of excessive dust production, which is less desirable.

The terms "size" or "diameter" as used in relation to a particle herein are understood to mean a largest cross-section of a particle. Furthermore, reduction will result in a statistical particle size distribution in which the median distribution is based on a size that amounts to approximately half the desired maximum size.

A shredder is used in one preferred embodiment. It is also possible to use other reducing devices that will lead to the same result.

In a preferred embodiment of he present invention, the residual product is preheated to a temperature of 30-100 °C for a period of 2 seconds to 3 minutes during the reduction process. Preferably, the residual product is preheated to a temperature of 70-90 °C, for example 80 °C, for the shortest possible period of time, preferably a period of 2-60 seconds, for example 5-10 seconds. As a result of said preheating in the shredder, a significant part of the mercury is already set free in said shredder, i.e. made available for further processing.

The heating of the present shredder, screw conveyors, extruders etc can take place in a usual manner, for example by electric means.

In a preferred embodiment of the present invention, the heating of particles in step b. takes place in a screw extruder (4). In said screw extruder, particles are conveyed for further processing. The heating of the particles takes place to a temperature of 30-120 °C, preferably 50-110 °C, for example 80-110 °C, for a period of 5-120 minutes, preferably 10-60 minutes, for example 30 minutes, thereby producing mercury vapour. The residence time and the temperature have been optimised such that virtually all mercury will be released in the form of vapour. The final temperature is preferably 30-90 °C, for example 45-75 °C, for example 57 °C. Usually more than 99.9% is released. As a result, the residual concentration in the particles is less than 1000 ppm, preferably less than 100 ppm, more preferably less than 10 ppm, for example less than 5 ppm, measured as mg Hg/kg of dry matter. In a preferred embodiment, values of 0.02-0.04 ppm have been reached, near the detection limit of the equipment used.

In a preferred embodiment of the present method, temperatures and residence times are controlled by means of control devices and measurements of concentrations of mercury vapour are controlled by means of software and/or control chips, in such a manner that a maximum amount of mercury will be released.

In a preferred embodiment of the present method, the immobilisation of mercury vapour takes place by capturing the mercury vapour on an active carbon filter, or precipitating the mercury vapour as a salt, such as mercury iodide, mercury sulfide, or bonding the mercury vapour on a matrix, such as a zeolite, a dolomite, a magnetite, or adsorbing the mercury vapour on a column, which may comprise bacteria or algae, or absorbing the mercury vapour on a gel, or bonding the mercury member to a catalyst, and combinations thereof, preferably by capturing the mercury vapour on an active carbon filter. The mercury vapour is to that end transferred, by exhaustion or a comparable method, to an immobilisation unit (17), where the mercury vapour is immobilised. Said unit (17) may consist of several parts and/or of several sequential parts. After being immobilised, the mercury can be refined. For safety reasons, the immobilisation unit (17) will preferably comprise a mercury monitoring system (20).

In a preferred embodiment of the present method, the mercury vapour is captured in one or more stages, preferably in one or more stages per process step. Furthermore preferably, the mercury is captured during the reducing step and during the heating step. It is preferable to capture a first fraction of mercury vapour already during the reduction step, for example in a first stage comprising an exhauster, or in two or more stages comprising exhausters. It is preferable to capture a first or a further fraction of mercury vapour during the heating step, for example in a first stage comprising an exhauster, or in two or more stages comprising exhausters, preferably in three or more stages. The number of stages is preferably geared to the size of the reducing device and the heater. Captured mercury vapour is transferred to the immobilisation unit (17).

In a preferred embodiment of the present method, the method is carried out at a reduced pressure, preferably a reduced pressure of 1 kPa - 50 kPA (0.01 - 0.5 bar), preferably a reduced pressure of 10 - 25 kPa. The reduced pressure is selected so that hardly any if any mercury vapour escapes into the environment in which the device is disposed. Preferably, one or more parts of the device, such as the reducing device (3) and the heater (4), are disposed in a reduced pressure environment, preferably all the parts, or at least all the relevant parts, are disposed in a reduced pressure environment. The device according to the invention is preferably disposed in one or more sealed spaces. Preferably, a reduced pressure prevails in said one or more sealed spaces, preferably a pressure slightly higher than the pressure of the device itself. In this way mercury vapour is prevented from escaping from the device into said spaces, which mercury vapour subsequently cannot not escape from said spaces.

In a preferred embodiment of the present method, dust is furthermore captured, for example by one or more filters. To that end part of the exhaust flow or the entire exhaust flow is passed through one or more filters. Preferably, a first filter (13) will capture coarse dust and small particles, whilst the second filter (15) will capture fine dust. Said one or more filters preferably operate under reduced pressure conditions, under elevated temperature conditions, for example 30-80 °C, preferably about 60 °C. The captured dust is preferably discharged by means of screw conveyors (14, 16), which preferably operate under elevated temperature conditions, for example a temperature of about 200 °C. Said screw conveyors are heated, for example electrically. The residence time in the screw conveyors is preferably 1-5 minutes. The dust is discharged to a collecting station (18b), for example a big bag station. Preferably, a reduced pressure prevails in the collecting station, which is preferably disposed in a reduced pressure space. For safety reasons the concentration of mercury vapour is measured in said space and/or in the storage space. Preferably, the storage space is separated from the space where the plant is disposed, so as to reduce the risk of mercury vapour contamination.

In a preferred embodiment of the present method, the residual product further comprises one or more components selected from the group of plastics, metals, glass, inorganic components, and electronic components. Using the present method it is thus possible to process a complex product comprising a multitude of materials and components, which components are typically present in residual products. This will be discussed in more detail in the description below of the present invention.

Within this context the term "metal" is understood to include not only metallic element, or a distinguishable combination thereof, but also alloys, such as brass, comprising one or more metals.

A preferred embodiment of the present method further comprises the steps of
- supplying a residual product,
- removing iron and/or ferromagnetic materials and/or components that comprise iron and/or ferromagnetic materials,
- removing other metals and/or components that comprise said metals,
- removing glass,
- removing plastics,
- storing one or more removed components, and
- discharging mercury.

Said steps will be explained in more detail in the description of the present device.

In a preferred embodiment of the present method, the method further comprises the monitoring of one or more mercury vapour concentrations and the controlling of the temperature and the residence time in the respective steps on the basis of the mercury vapour concentration. This aspect has been extensively discussed in the foregoing and will be discussed in more detail hereinafter.

The present invention, according to a second aspect thereof, relates to a device for processing residual products that contain mercury, such as flat screens, successively comprising a reducing device (3), a screw extruder (4) and a mercury capturing device (17) arranged in a series configuration.

A preferred embodiment of the present device further comprises one or more of a feeding device (011, 021, 1), a screening device (5a), a metal separator (7, 10), a glass separator (13), a plastic separator (13), a dust filter (13, 15), one or more collecting stations (18a, 18b, 18c, 18d), a device for generating a reduced pressure (51), a mercury vapour concentration monitor (20), software, a control device, an exhauster (51), a storage station (101), a vacuous space or reduced pressure space (100, 101, 102), a heater, and a transfer device (4, 5b, 6, 8, 9, 11, 12, 14, 16).

The invention will now be explained in more detail by means of a description of a preferred embodiment of the present invention, in which reference is made to the following figures:
Figure 1 shows a flow chart of a preferred embodiment.
Figure 2 shows part of the flow chart of a preferred embodiment.

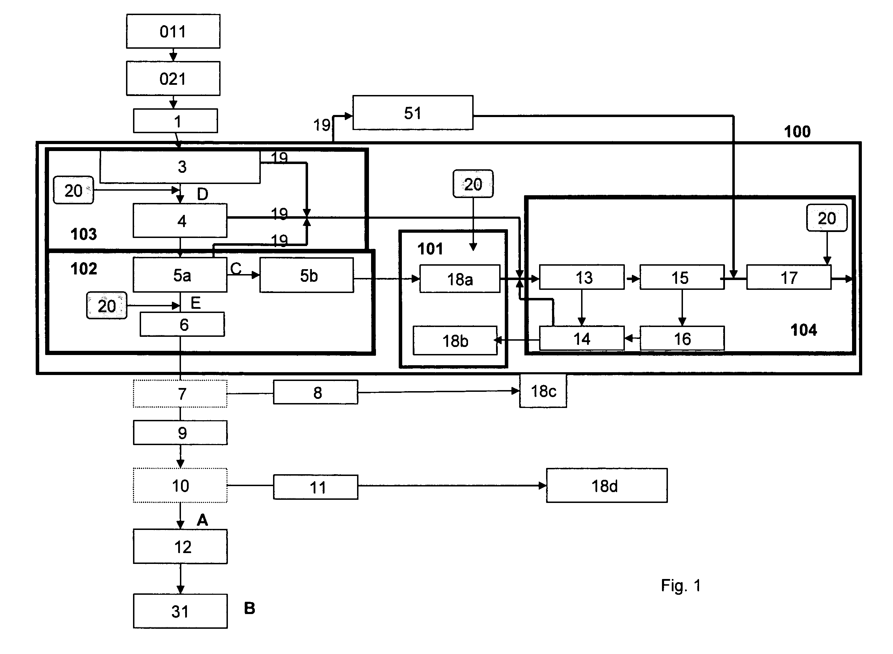

Figure 1 in detail relates to a device according to the invention for carrying out the present invention.

In station (011) products to be processed are collected. The station (011) contains LCD screens, for example. Preferably, loose elements, such as connecting leads, are separated first. Respective products are placed on a feed belt (1) by means of a cable (021). The feed belt (1) carries the products to be processed to a reducing device (3). Alternatively, products may be fed directly to the reducing device. The device is thus suitable for processing, possibly simultaneously, one or more products, which may or may not be of the same kind or type.

The reducing device (3) may for example be a shredder, a crusher, a chopper, a cutter etc, or combinations thereof. In a preferred embodiment, products are reduced to a suitable size in the shredder (3), for example to a maximum size with a diameter of less than 20 cm, preferably a size with a diameter of less than 8 cm. Thus particles are obtained whose sizes vary between more than 0 mm to, for example, 8 cm. Said reducing of the particles is necessary in order to make the products accessible, i.e., in order to enable the release of mercury. To that end the products must on the one hand be reduced to a sufficiently small size, which size on the other hand must not be too small, because otherwise this would lead to the formation of too many byproducts, such as dust.

In a preferred embodiment, the residual product is preheated to a temperature of 30-70 °C for a period of time of 1-10 minutes during the reducing step. Thus part of the mercury is already converted into a gaseous state. The temperature is preferably about 50 °C, and the time is preferably about 3 minutes.

The term "time" as used herein relates to an average period of time. Considering the nature of the means used, a period of time will statistically vary around the average time.

From the shredder (3) the particles are transferred to a device which is capable of heating the particles and further conveying the particles, such as a screw extruder (4). In said screw extruder (4), the particles are heated to a suitable temperature for a suitable period of time, such that sufficient gaseous mercury is released. To that end the temperature will range between 50 °C and 120 °C and the time will range between 5 and 120 minutes. The temperature will preferably as low as possible, in connection with the energy consumption. For the same reason, and also in view of the throughput capacity, the residence time of particles in the screw extruder (4) will be as short as possible. In a preferred embodiment, the temperature will be about 100-110 °C and the residence time will on average be about 30 minutes. The mercury is preferably immobilised in one or more filters (13, 15). Preferably, a first filter (13) captures dust, and a second filter (15) captures fine dust. A second filter (15) is preferably an HEPA filter.

In a preferred embodiment, the immobilisation (17) of the mercury vapour takes place by capturing the mercury vapour on one or more active carbon filters, or precipitating the mercury vapour as a salt, such as mercury iodide, mercury sulfide, or bonding the mercury vapour on a matrix, such as a zeolite, a dolomite, a magnetite, or adsorbing the mercury vapour on a column, which may comprise bacteria or algae, or absorbing the mercury vapour on a gel, or bonding the mercury member to a catalyst, and combinations thereof. Preferably, the mercury is captured on an active carbon filter. A type of carbon filter that is used for this purpose is Airpel 10+ S, which is incorporated in an Aircon® marketed by Desotec. The carbon used is active carbon based on sulphur-impregnated coal. The total BET area thereof is 1050 m²/g, CTC is at least 60%, the water content is at most 3%, the density is 600g/l, the pellet diameter is 3-4 mm and the sulphur content is 9-11 %.

In a preferred embodiment the particles, having been heated in the screw extruder (4), are conveyed to a device (5a) for separating larger and small particles, for example one or more drum screens. The separating device (5a) is maintained at a suitable temperature, for example a temperature in the 50-100 °C range, preferably a temperature of 80 °C, so as to remove as much residual mercury as possible. The residence time is about 1-30 minutes, preferably about 10 minutes. Smaller particles, preferably particles smaller than 2 cm, more preferably smaller than 8 mm, are transferred to a storage station (18a) by means of a transfer device (5b), such as a screw conveyor. The transfer device (5b) is preferably maintained at an elevated temperature, for example by means of an electric heater. The air in the storage station (18a) is exhausted, using a reduced pressure, through one or more filters (13, 15), in order to capture dust on the one hand and residual mercury on the other hand. The filter (13) has a capacity of 4500 m³/h, for example, with a pressure drop of about 2 kPa, the filter (15) has a capacity of 4500 m³/h, for example, with a pressure drop of about 0.3 kPa.

In the present method, more than 90% of the mercury that is present is captured, in preferred embodiments more than 99% of the mercury is captured, in an optimised preferred embodiment more than 99.9999% is captured.

In a preferred embodiment, captured dust or fine dust is transferred to the storage station (18b) by means of transfer devices (14, 16), such as screw conveyors.

In a preferred embodiment, a reduced pressure, preferably a pressure of 1 kPA - 50 kPa (0.01- 0.5 bar) is maintained by means of partial vacuum device (51) in the device (100), of which the storage station (101) may form part. A partial vacuum device (51) discharges air containing mercury vapour to the immobilisation device (17). The partial vacuum device (51) has a capacity of 8000-45,000 m³/h, for example.

The device (100) may optionally further comprise a transfer device (6), such as a screw conveyor, for transferring particles to an iron capturing device (7), such as a magnet. Captured iron as well as other ferromagnetic materials are transferred to a storage station (18c) by means of a transfer device (8), such as a screw conveyor.

Optionally the device (100) further comprises a transfer device (9), such as a screw conveyor, for transferring particles to a metal separator (10). In said separator, other metals such as Al, Si, Ti, Cr, Mn, Co, Ni, Cu, Zr, Zn, Mo, Pd, Ag, Au, Pt, W and Pb, and possibly residual iron, and/or particles that contain said metals, are further separated. Captured metals as well as particles that contain said metals are transferred to a storage station (18d) by means of a transfer device (11), such as a screw conveyor.

Optionally the device (100) further comprises a transfer device (12), such as a screw conveyor, for transferring particles to a separator (31) for separating glass and/or plastic and/or other components (A, B).

The device (100) optionally comprises several exhaust points (19).

In a preferred embodiment, the mercury vapour is captured in one or more stages, preferably in one or more stages per process step. Preferably, the mercury is captured during the reducing step and the heating step. Furthermore preferably, the reducing device (3) comprises one or more exhausters (19), and the transfer device (4) comprises one or more exhausters (19), more preferably two or more exhausters (19), even more preferably three or more exhausters (19).

The device (100) optionally comprises a mercury monitoring system (20). Such a system determines the local mercury concentration. More preferably, the device (100) comprises a mercury monitoring system (20) in the reducing device (3), a mercury monitoring system (20) in the transfer device (4), a mercury monitoring system (20) in the separator (5), a mercury monitoring system (20) in the filter (13, 15), a mercury monitoring system (20) in one or more spaces where the device is disposed, and a mercury monitoring system (20) in the storage station (18a, b). Preferably, the device (100) further comprises software for optimising the temperature and the residence time in the various parts thereof. Optimization can take place in terms of relative amounts of mercury being removed per process step, as well as in terms of desired maximum mercury vapour concentrations in any space.

The device (100) optionally comprises one or more reduced pressure cabins (101, 102, 103, 104), in which one or more parts of the device (100) are disposed. The use of such a cabin further reduces the risk of poisonous mercury vapour escaping.

In the present figure, "A" indicates a mixture of, among other things, glass and plastic, "B" indicates separated glass, plastic, etc, "C" indicates particles having a particle size of less than 8 mm, "D" indicates particles having a particle size between 0 and 80 mm, and "E" indicates particles having a particle size of more than 8 mm.

The sub-device (102), which is optional, is optionally disposed in the same space as the rest of the device (100) and/or a sub-device (102). The sub-devices (102, 101) as well as the rest of the device (100) are preferably each separately monitored for mercury vapour concentration by the monitor (20).

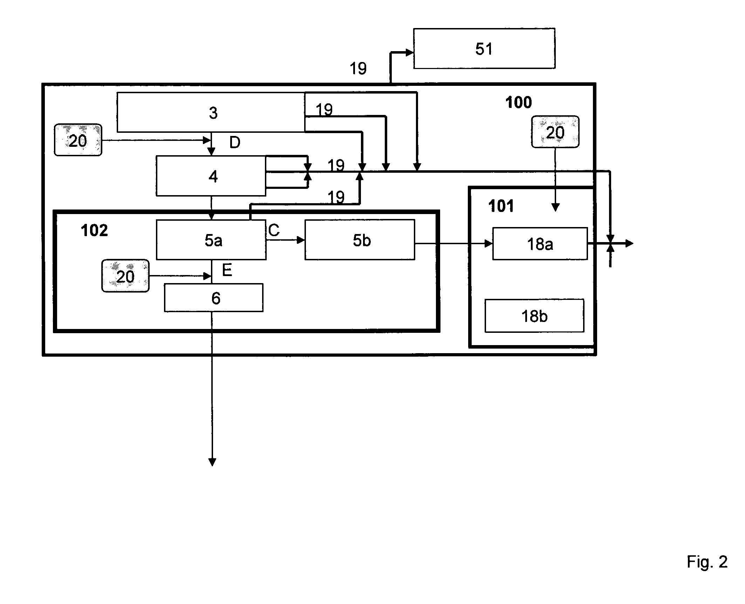

Figure 2 shows that the reducing device (3) may be provided with one or more exhausters which discharge captured vapour, comprising mercury vapour, to filters (13, 15). The heater (4) may likewise be provided with one or more exhausters, which discharge captured vapour, comprising mercury vapour, to filters (13, 15). Furthermore, the separator (5a) may be provided with one or more exhausters, which discharge captured vapour, comprising mercury vapour, to filters (13, 15).

The above description, which refers to a preferred embodiment as shown in the figures, does not have a limitative effect on the scope of the present invention, which is determined by the appended claims.

## Claims

1. A method for processing a residual product that contains mercury, such as flat screen, which method comprises the steps of:
a. reducing the residual product, thereby obtaining particles having a suitable size, said particles having a diameter of less than 20 cm, preferably less than 12 cm, more preferably less than 8 cm, even more preferably less than 3.8 cm;
b. heating said particles to a temperature within the range of 30 °C to 120 °C for a period of 5 - 120 minutes, thereby producing mercury vapour, and
c. immobilising mercury vapour.

2. A method according to claim 1, wherein said reduction takes place in a shredder (3).

3. A method according to one or more of the preceding claims, wherein the residual product is preheated to a temperature of 30-100 °C for a period of 2 seconds to 3 minutes during the reduction process.

4. A method according to one or more of the preceding claims, wherein the heating of particles in step b. takes place in a screw extruder (4).

5. A method according to one or more of the preceding claims, wherein the immobilisation of mercury vapour takes place by capturing the mercury vapour on an active carbon filter, or precipitating the mercury vapour as a salt, such as mercury iodide, mercury sulfide, or bonding the mercury vapour on a matrix, such as a zeolite, a dolomite, a magnetite, or adsorbing the mercury vapour on a column, which may comprise bacteria or algae, or absorbing the mercury vapour on a gel, or bonding the mercury member to a catalyst, and combinations thereof, preferably by capturing the mercury vapour on an active carbon filter.

6. A method according to one or more of the preceding claims, wherein the mercury vapour is captured in one or more stages, preferably in one or more stages per process step.

7. A method according to one or more of the preceding claims, wherein the mercury is captured during the reducing step and during the heating step.

8. A method according to claim 7, wherein the method is carried out at a reduced pressure, preferably a reduced pressure of 1 kPa - 50 kPA (0.01 - 0.5 bar), preferably a reduced pressure of 10 - 25 kPa.

9. A method according to one or more of the preceding claims, wherein dust is furthermore captured, for example by one or more filters.

10. A method according to one or more of the preceding claims, wherein the residual product further comprises one or more components selected from the group of plastics, metals, glass, inorganic components, and electronic components.

11. A method according to one or more of the preceding claims, further comprising one or more of the steps of
- supplying a residual product,
- removing iron and/or ferromagnetic materials and/or components that comprise iron and/or ferromagnetic materials,
- removing other metals and/or components that comprise said metals,
- removing glass,
- removing plastics,
- storing one or more removed components, and
- discharging mercury.

12. A method according to one or more of the preceding claims, wherein the method further comprises the monitoring of one or more mercury vapour concentrations and the controlling of the temperature and the residence time in the respective steps on the basis of the mercury vapour concentration.

13. A device (100) for processing residual products that contain mercury, such as flat screens, successively comprising a reducing device (3), a screw extruder (4) and a mercury capturing device (17) arranged in a series configuration, said device further comprising one or more of a feeding device (011, 021, 1), a screening device (5a), a metal separator (7, 10), a glass separator (13), a plastic separator (13), a dust filter (13, 15), one or more collecting stations (18a, 18b, 18c, 18d), a device for generating a reduced pressure (51), a mercury vapour concentration monitor (20), software, a control device, an exhauster (51), a storage station (101), a reduced pressure space (100, 101, 102), a heater, and a transfer device (4, 5b, 6, 8, 9, 11, 12, 14, 16).

## Patentansprüche

1. Verfahren zur Aufbereitung eines Quecksilber enthaltenden Restprodukts wie etwa eines Flachbildschirms, wobei das Verfahren die folgenden Schritte umfasst:
a. Zerkleinern des Restprodukts, wodurch Teile mit einer geeigneten Größe erhalten werden, wobei die Teile einen Durchmesser von weniger als 20 cm, vorzugsweise weniger als 12 cm, bevorzugter weniger als 8 cm, noch bevorzugter weniger als 3,8 cm aufweisen,
b. Erwärmen der Teile auf eine Temperatur innerhalb des Bereichs von 30°C bis 120°C über einen Zeitraum von 5 bis 120 Minuten, wodurch Quecksilberdampf entsteht, und
c. Immobilisieren von Quecksilberdampf.

2. Verfahren nach Anspruch 1, bei dem die Zerkleinerung in einem Shredder (3) erfolgt.

3. Verfahren nach einem oder mehreren der vorhergehenden Ansprüche, bei dem das Restprodukt während des Zerkleinerungsvorgangs über einen Zeitraum von 2 Sekunden bis 3 Minuten auf eine Temperatur von 30 bis 100°C vorgewärmt wird.

4. Verfahren nach einem oder mehreren der vorhergehenden Ansprüche, bei dem das Erwärmen von Teilen in Schritt b. in einer Schneckenpresse (4) erfolgt.

5. Verfahren nach einem oder mehreren der vorhergehenden Ansprüche, bei dem die Immobilisierung von Quecksilberdampf erfolgt, indem der Quecksilberdampf an einem Aktivkohlefilter aufgefangen wird oder der Quecksilberdampf als Salz wie etwa Quecksilberiodid, Quecksilbersulfid ausgefällt wird oder der Quecksilberdampf an einer Matrix wie etwa einem Zeolith, einem Dolomit, einem Magnetit gebunden wird oder der Quecksilberdampf an einer Kolonne, die Bakterien oder Algen umfassen kann, adsorbiert wird oder der Quecksilberdampf an einem Gel absorbiert wird oder der Quecksilberdampf an einen Katalysator gebunden wird, sowie durch Kombinationen davon, vorzugsweise indem der Quecksilberdampf an einem Aktivkohlefilter aufgefangen wird.

6. Verfahren nach einem oder mehreren der vorhergehenden Ansprüche, bei dem der Quecksilberdampf in einer oder mehreren Stufen aufgefangen wird, vorzugsweise in einer oder mehreren Stufen pro Prozessschritt.

7. Verfahren nach einem oder mehreren der vorhergehenden Ansprüche, bei dem das Quecksilber während des Zerkleinerungsschrittes und während des Erwärmungsschrittes aufgefangen wird.

8. Verfahren nach Anspruch 7, wobei das Verfahren unter einem verminderten Druck durchgeführt wird, vorzugsweise einem verminderten Druck von 1 kPa bis 50 kPa (0,01 bis 0,5 bar), vorzugsweise einem verminderten Druck von 10 bis 25 kPa.

9. Verfahren nach einem oder mehreren der vorhergehenden Ansprüche, bei dem des Weiteren Staub aufgefangen wird, zum Beispiel mittels eines oder mehrerer Filter.

10. Verfahren nach einem oder mehreren der vorhergehenden Ansprüche, bei dem das Restprodukt ferner eine oder mehrere aus der aus Kunststoffen, Metallen, Glas, anorganischen Komponenten und elektronischen Komponenten bestehenden Gruppe ausgewählte Komponenten umfasst.

11. Verfahren nach einem oder mehreren der vorhergehenden Ansprüche, das ferner einen oder mehrere der Schritte umfasst, bei denen
- ein Restprodukt bereitgestellt wird,
- Eisen und/oder ferromagnetische Materialien und/oder Komponenten, die Eisen und/oder ferromagnetische Materialien umfassen, entfernt wird/werden,
- andere Metalle und/oder Komponenten, die diese Metalle umfassen, entfernt werden,
- Glas entfernt wird,
- Kunststoff entfernt wird,
- eine oder mehrere entfernte Komponenten gelagert wird/werden und
- Quecksilber ausgetragen wird.

12. Verfahren nach einem oder mehreren der vorhergehenden Ansprüche, wobei das Verfahren ferner das Überwachen einer oder mehrerer Quecksilberdampfkonzentrationen und das Steuern der Temperatur und der Verweilzeit bei den jeweiligen Schritten basierend auf der Quecksilberdampfkonzentration umfasst.

13. Vorrichtung (100) zur Aufbereitung von Quecksilber enthaltenden Restprodukten wie etwa Flachbildschirmen, die nacheinander eine Zerkleinerungsvorrichtung (3), eine Schneckenpresse (4) und eine Quecksilberauffangvorrichtung (17) umfasst, die in einer Reihenausführung angeordnet sind, wobei die Vorrichtung ferner eines oder mehrere der folgenden Elemente umfasst: eine Zuführvorrichtung (011, 021, 1), eine Siebvorrichtung (5a), einen Metallabscheider (7, 10), einen Glasabscheider (13), einen Kunststoffabscheider (13), ein Staubfilter (13, 15), eine oder mehrere Sammelstationen (18a, 18b, 18c, 18d), eine Vorrichtung zur Erzeugung eines verminderten Drucks (51), eine Quecksilberdampfkonzentrationsüberwachungsvorrichtung (20), Software, eine Steuervorrichtung, eine Absaugvorrichtung (51), eine Lagerstation (101), einen Unterdruckraum (100, 101, 102), eine Heizvorrichtung und eine Transportvorrichtung (4, 5b, 6, 8, 9, 11, 12, 14, 16).

## Revendications

1. Procédé pour traiter un produit résiduel qui contient du mercure, tel qu'un écran plat, lequel procédé comprend les étapes consistant à :
a. réduire le produit résiduel, obtenant ainsi des particules ayant une taille appropriée, lesdites particules ayant un diamètre inférieur à 20 cm, de préférence inférieur à 12 cm, encore de préférence inférieur à 8 cm, de manière encore plus préférée inférieur à 3,8 cm ;
b. faire chauffer lesdites particules à une température dans la plage de 30 °C à 120 °C pendant une période de 5 à 120 minutes, produisant ainsi de la vapeur de mercure, et
c. immobiliser la vapeur de mercure.

2. Procédé selon la revendication 1, dans lequel ladite réduction a lieu dans un broyeur (3).

3. Procédé selon une ou plusieurs des revendications précédentes, dans lequel le produit résiduel est préchauffé à une température de 30-100 °C pendant une période de 2 secondes à 30 minutes pendant le processus de réduction.

4. Procédé selon une ou plusieurs des revendications précédentes, dans lequel le chauffage des particules à l'étape b. a lieu dans une extrudeuse à vis (4).

5. Procédé selon une ou plusieurs des revendications précédentes, dans lequel l'immobilisation de la vapeur de mercure a lieu en capturant la vapeur de mercure sur un filtre à charbon actif, ou en précipitant la vapeur de mercure sous la forme d'un sel, tel que l'iodure de mercure, le sulfure de mercure ou en liant la vapeur de mercure sur une matrice, telle qu'une zéolite, une dolomite, une magnétite, ou en adsorbant la vapeur de mercure sur une colonne qui peut comprendre des bactéries ou des algues, ou en absorbant la vapeur de mercure sur un gel ou en liant l'élément de mercure à un catalyseur et leurs combinaisons, de préférence en capturant la vapeur de mercure sur un filtre à charbon actif.

6. Procédé selon une ou plusieurs des revendications précédentes, dans lequel la vapeur de mercure est capturée dans un ou plusieurs étages, de préférence dans un ou plusieurs étages par étape de procédé.

7. Procédé selon une ou plusieurs des revendications précédentes, dans lequel le mercure est capturé pendant l'étape de réduction et pendant l'étape de chauffage.

8. Procédé selon la revendication 7, dans lequel le procédé est réalisé à une pression réduite, de préférence une pression réduite de 1 kPa - 50 kPa (0,01 - 0,5 bar), de préférence une pression réduite de 10 - 25 kPa.

9. Procédé selon une ou plusieurs des revendications précédentes, dans lequel la poussière est en outre capturée, par exemple par un ou plusieurs filtres.

10. Procédé selon une ou plusieurs des revendications précédentes, dans lequel le produit résiduel comprend en outre un ou plusieurs composants sélectionnés dans le groupe comprenant les plastiques, les métaux, le verre, les composants inorganiques et les composants électroniques.

11. Procédé selon une ou plusieurs des revendications précédentes, comprenant en outre une ou plusieurs des étapes consistant à :
- fournir un produit résiduel,
- retirer du fer et/ou des matériaux ferromagnétiques et/ou des composants qui comprennent du fer et/ou des matériaux ferromagnétiques,
- retirer d'autres métaux et/ou composants qui comprennent lesdits métaux,
- retirer le verre,
- retirer les plastiques,
- stocker un ou plusieurs composants retirés, et
- décharger le mercure.

12. Procédé selon une ou plusieurs des revendications précédentes, dans lequel le procédé comprend en outre l'étape consistant à surveiller une ou plusieurs concentrations de vapeur de mercure et l'étape consistant à contrôler la température et le temps de séjour dans les étapes respectives en fonction de la concentration de vapeur de mercure.

13. Dispositif (100) pour traiter des produits résiduels qui contiennent du mercure, tels que des écrans plats, comprenant successivement un dispositif de réduction (3), une extrudeuse à vis (4) et un dispositif de capture de mercure (17) agencé dans une configuration en série, ledit dispositif comprenant en outre un ou plusieurs parmi un dispositif d'alimentation (011, 021, 1), un dispositif de tamisage (5a), un séparateur de métal (7, 10), un séparateur de verre (13), un séparateur de plastique (13), un filtre à poussière (13, 15), une ou plusieurs stations de collecte (18a, 18b, 18c, 18d), un dispositif pour générer une pression réduite (51), un dispositif de surveillance de concentration de vapeur de mercure (20), un logiciel, un dispositif de commande, un extracteur (51), une station de stockage (101), un espace de pression réduite (100, 101, 102), un dispositif de chauffage et un dispositif de transfert (4, 5b, 6, 8, 9, 11, 12, 14, 16).
